# EUROPEAN PATENT SPECIFICATION

(11) **EP 4 079 539 B1**
(45) Date of publication and mention of the grant of the patent: **28.02.2024**
(21) Application number: 20901704.5
(22) Date of filing: 07.12.2020
(51) Int. Cl.: B60C 3/04, B60C 11/00, B60C 11/11, B60C 11/03, B60C 11/12

(54) **TIRE**
REIFEN
PNEUMATIQUE

(30) Priority: 19.12.2019 JP 2019229325
(43) Date of publication of application: 26.10.2022
(73) Proprietor: BRIDGESTONE CORPORATION, Chuo-ku Tokyo 104-8340 (JP)
(72) Inventor: KAJIYAMA Yuji, Tokyo 104-8340 (JP); ASANUMA Koji, Tokyo 104-8340 (JP)
(74) Representative: Marks & Clerk LLP
(86) International application number: PCT/JP2020/045366
(87) International publication number: WO 2021/124939

(56) References cited:
- EP-A1- 2 287 016
- WO-A1-2012/111296
- WO-A1-2013/042256
- WO-A1-2014/103070
- WO-A1-2017/082411
- DE-T5-112016 000 438
- DE-T5-112016 000 553
- JP-A- H06 344 723
- JP-A- H07 276 924
- JP-A- H08 197 911
- JP-A- 2001 063 322
- JP-A- 2005 053 332
- JP-A- 2012 056 456
- JP-A- 2012 236 536
- JP-A- 2013 180 693
- JP-A- 2015 214 286
- JP-A- 2016 147 655
- JP-A- 2017 206 144

## Description

### [Technical Field]

The present invention relates to a tire suitable for traveling on an ice/snow road surface.

### [Background Art]

Conventionally, in a pneumatic tire (hereinafter, omitted as a "tire" when appropriate) such as a studless tire suitable for traveling on an ice/snow road surface, in order to secure driving performance on the ice/snow road surface (hereinafter, on-snow performance), the shape of a block in contact with the road surface is complicated and many fine grooves such as sipes are generally formed.

In such a tire, the block in the tread center region where the contact pressure is high and firmly grounded smoothly wear, while the block in the tread shoulder region where the contact pressure is liable to be low due to the crown shape of the tire is not firmly grounded, and uneven wear such as heel-and-toe wear is particularly easy to occur.

Therefore, there is known a structure in which a bottom-up portion is provided in a groove portion between adjacent blocks in the tire circumferential direction to connect the adjacent blocks (Patent literature 1). Attention is also drawn to the disclosures of JPH06-344723A, JP2016-147655A, EP2287016A1 and DE112016000553T5 which discloses a tire having a tread portion with block rows partitioned by circumferentially extending main grooves and width direction grooves. The blocks each have a plurality of width extending sipe portions having different distances in the circumferential direction to each other or to the block end.

### [Citation List]

### [Patent Literature]

[Patent Literature 1]
Japanese Unexamined Patent Application Publication No. 2001 -277814

### [Summary of Invention]

However, the above-described structure in which a bottom-up portion for connecting adjacent blocks is provided is not necessarily appropriate in consideration of the influence on the environment, because the rubber volume simply increases and the rolling resistance (RR) increases. On the other hand, unless proper block rigidity is ensured, it is difficult not only to suppress uneven wear but also to demonstrate high on-snow performance (braking and driving performance, steering stability, etc.).

In addition, in recent years, braking performance on an ice road surface tended to be regarded as important in on-snow performance. Affinity with the anti-lock braking system (ABS) is also important for braking on ice road surfaces as ABS is frequently intervened.

Accordingly, an object of the present invention is to provide a tire capable of further enhancing on-snow performance, particularly braking performance in consideration of affinity with ABS, depending on the shape of the block itself.

The present invention provides a tire as claimed in claim 1.

### [Brief Description of Drawings]

FIG. 1 is a partial plan view of a tread of a pneumatic tire 10.
FIG. 2 is a cross-sectional view of the pneumatic tire 10 along the tire width direction and the tire radial direction.
FIG. 3 is a partial plan view of a tread 20 including a block 100 and a block 150.
FIG. 4 is a partial plan view of the tread 20 including a block 200.
FIG. 5 is a partial plan view of the tread 20 including a block 300.
FIGs. 6A and 6B illustrate the operation and effect of the block 100 according to the embodiment.

### [Modes for Carrying out the Invention]

Embodiments will be described below with reference to the drawings. It should be noted that the same functions and configurations are denoted by the same or similar reference numerals, and the description thereof is appropriately omitted.

### (1) Overall schematic configuration of the tire

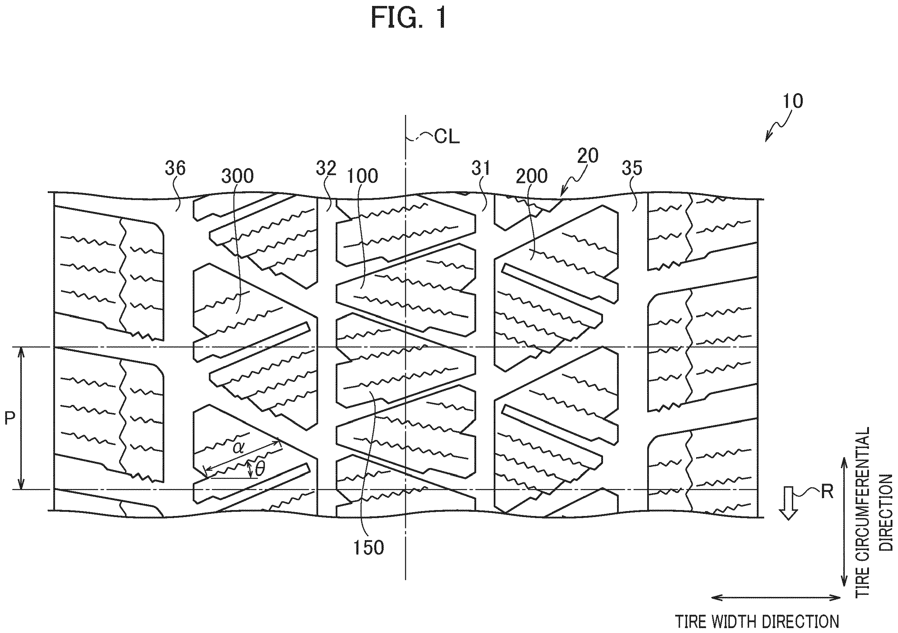

FIG. 1 is a partially plan view of a tread of the pneumatic tire 10 according to the present embodiment. As shown in FIG. 1, the pneumatic tire 10 includes a plurality of blocks partitioned by a plurality of circumferential direction grooves extending in the tire circumferential direction and a plurality of width direction grooves extending in the tire width direction.

The pneumatic tire 10 is a tire suitable for traveling on an ice/snow road surface and is called a studless tire or the like.

The studless tire may be referred to as a snow tire or a winter tire. Alternatively, the pneumatic tire 10 may be a so-called all-season tire usable not only in winter but also in all seasons.

Although the type of vehicle to which the pneumatic tire is mounted is not particularly limited, the pneumatic tire 10 may be suitably used in a general standard passenger car, particularly in a sport utility vehicle (SUV) having a relatively heavy vehicle weight.

The tread 20 is a portion in contact with the road surface. The tread 20 is provided with a plurality of blocks (which may be referred to as land blocks).

A block 100 and a block 150 are provided in the region including tire equatorial line CL. Specifically, the block 100 and the block 150 are alternately provided in the tire circumferential direction. The block 100 and the block 150 may be referred to as center blocks.

It should be noted that the block 100 and the block 150 do not necessarily have to be provided at positions overlapping the tire equatorial line CL. The block 100 and the block 150 may be provided on tire equatorial line CL than other blocks provided on the tread 20.

The block 100 and the block 150 are partitioned by circumferential direction groove 31 and the circumferential direction groove 32. A block 200 is provided outside in the tire width direction of the circumferential direction groove 31. A block 300 is provided outside in the tire width direction of the circumferential direction groove 32.

The block 200 and the block 300 have linearly symmetric shapes. The block 200 and the block 300 may be referred to as second blocks.

A circumferential direction groove 35 is formed outside in the tire width direction of the block 200. A circumferential direction groove 36 is formed outside in the tire width direction of the block 300. The circumferential direction groove 35 and the circumferential direction groove 36 extend in the tire circumferential direction and are the circumferential direction grooves formed most outside in the tire width direction.

The four circumferential direction grooves, specifically, the circumferential direction groove 31, the circumferential direction groove 32, the circumferential direction groove 35 and the circumferential direction groove 36 are linear grooves (straight grooves) extending along the tire circumferential direction. The groove having such a shape may be referred to as a see-through shape or a see-through groove or the like because the groove can be seen to the tip when it is developed on a plane.

In addition, the block rigidity of the block 200 and the block 300 (the second block) may be higher than the block rigidity of the block 100 (center block), and the block 200 and the block 300 may not necessarily be such that the block 100 and the block 150 overlap the tire equatorial line CL.

The block rigidity may be obtained, for example, by the measurement test method of bending rigidity of the Japanese Industrial Standards (JIS) or by simulation based on the shape of the block and the type of rubber.

In this embodiment, the rotation direction R of the pneumatic tire 10 when the vehicle is mounted is designated. However, the rotation direction R of the pneumatic tire 10 may not necessarily be designated.

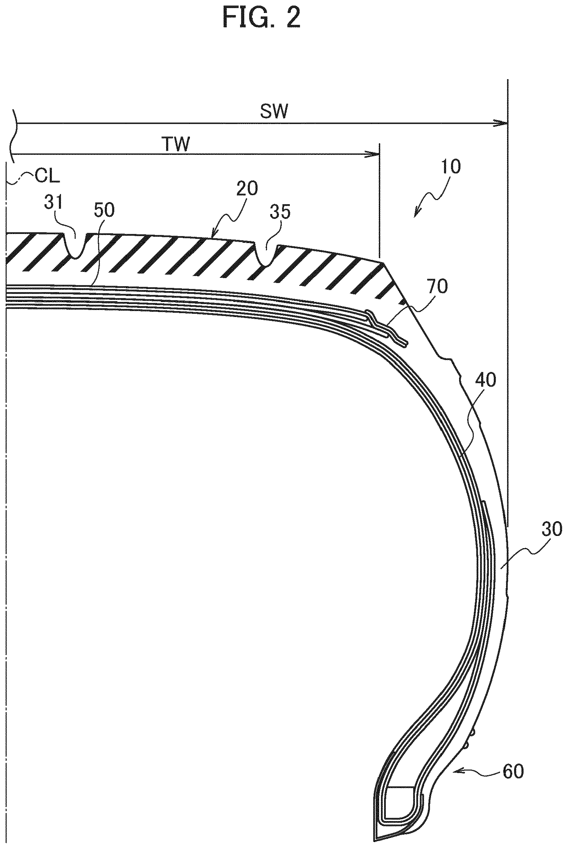

FIG. 2 is a cross-sectional view of the pneumatic tire 10 along the tire width direction and the tire radial direction. In FIG. 2, the cross sectional hatching is partially omitted.

As shown in FIG. 2, the pneumatic tire 10 includes the tread 20, a tire side portion 30, a carcass 40, a belt layer 50, a bead portion 60, and a belt reinforcing layer 70.

As shown in FIG. 2, the ratio TW/SW of the ground contact width TW of the pneumatic tire 10 and the maximum width SW of the pneumatic tire 10 is 0.75 or more and 0.95 or less.

The ground contact width TW (and the ground contact length to be described later) may be the width of the ground contact portion of the tread 20 when the pneumatic tire 10 is set to normal internal pressure and normal load is applied.

In Japan, the normal internal pressure is the air pressure corresponding to the maximum load capacity in the JATMA (Japan Automobile Tire Manufacturers Association) YearBook, and the normal load is the maximum load capacity (maximum load) corresponding to the maximum load capacity in the JATMA YearBook. In addition, ETRTO in Europe, TRA in the United States, and other tire standards in other countries correspond to it.

In addition, in the present embodiment, the pneumatic tire 10 preferably has the numerical values of the block edge and the sipe edge within the range shown in Table 1.

**[Table 1]**

| Total amount of front and rear block edges perpitch [mm / 1 pitch] | Totalam ount of front and rear sipes edges perpitch [mm / 1 pitch] | Front and rearbbck edges per unit grounding length [mm / 1 pitch length (mm)] | Front and rear sipe edges perunit grounding length [mm / 1 pitch length (mm )] | Front and rear block edge / front and rear sipe edge perunit grounding length [Dimension less] |
|---|---|---|---|---|
| 300∼340 | 240∼420 | 7.9∼13 | 6.3∼16.2 | 0.48∼2.0 |

As shown in FIG. 1, when the number of sipes present in one pitch is N, the total amount of the front and rear sipe edges per pitch is calculated as N × acos θ * (the number of sipes present in one pitch) for each sipe type and added together. θ is the inclination angle of the sipe with respect to the tire width direction, and α is the length of each sipe in the direction inclined by θ degrees.

The front and rear sipe edge per unit grounding length is the sum of N × acos θ * (the number of sipes present in one pitch) calculated for each sipe type and divided by the pitch length.

The front and rear block edge is similar to the front and rear sipe edge, and the object is not the sipe but the edge portion of the block.

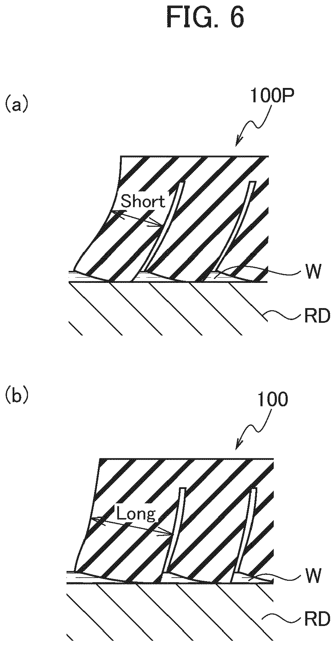

As shown in Table 1, the front and rear block edge/front and rear sipe edge per unit grounding length is preferably 0.48 to 2.00. In particular, the scratching effect (edge effect) of the road surface RD (not shown in FIG. 2, see FIGs. 6A and 6B) by the block edge can be effectively improved by the edge component (edge pressure is high) of the block edge by setting the edge to 0.48 or more.

In addition, by making the amount 2.00 or less, the effect of removing the water film (which may be called the water removing performance) can be effectively enhanced by the edge component of the sipe. Thus, braking performance (on-ice braking performance) on an on-ice road surface is greatly improved.

It is more preferable that the front and rear block edge/front and rear sipe edge per unit grounding length is 0.60 to 1.40. The specific numerical range may vary slightly depending on the tire size, but the numerical range shown in Table 1 may be based on 225/65/R 17.

The pitch P shown in Table 1 and FIG. 1 may be interpreted as an interval (length) at which the same tread pattern is repeated in the tire circumferential direction. The tread pattern may be composed of a plurality of pitches P. The unit grounding length may be interpreted as an arbitrary contact length based on the contact length at the normal internal pressure and the normal load. However, the unit grounding length is preferably equal to or less than the contact length at the normal internal pressure and the normal load.

The tire side portion 30 is continuous to the tread 20 and positioned inside in tire radial direction of the tread 20. The tire side portion 30 is a region from outside end in the tire width direction of the tread 20 to the upper end of bead portion 60. The tire side portion 30 may be called a side wall or the like.

The carcass 40 forms the skeleton of the pneumatic tire 10. In the present embodiment, the carcass 40 has a radial structure in which carcass cords (not shown) arranged radially along the tire radial direction are coated with a rubber material. However, it is not limited to the radial structure, and a bias structure in which the carcass cord is intersected with the tire radial direction may be used.

The belt layer 50 is provided inside in tire radial direction of the tread 20. The belt layer 50 may include a pair of crossing belt intersecting steel cords and a reinforcing belt provided in outside in the tire radial direction of the crossing belt. The crossing belt may be called as a main belt. An organic fiber cord may be used for the reinforcing belt.

An outside end in the tire width direction of the belt layer 50 including the main belt may be positioned outside in the tire width direction than the circumferential direction grooves 35, 36 extending in the tire circumferential direction and formed most outside in the tire width direction.

The bead portion 60 is continuous to the tire side portion 30 and positioned inside in tire radial direction of the tire side portion 30. The bead portion 60 is an annular shape extending in the tire circumferential direction.

The belt reinforcing layers 70 are provided at respective ends (may be referred to as tread shoulders) of the tire width direction outside of the belt layer 50. More specifically, the belt reinforcing layer 70 is provided so as to cover outside end of the belt layer 50 in the tire width direction. An organic fiber cord may be used for the belt reinforcing layer 70.

An inside end in the tire width direction of the belt reinforcing layer 70 is preferably positioned inside in the tire width direction than the ground contact end (position of the ground contact width TW) of the tread 20. The outside end in the tire width direction of the belt reinforcing layer 70 is preferably positioned outside in the tire width direction than the ground contact end (position of the ground contact width TW) of the tread 20.

### (2) Block shape

Next, the shape of each block provided on the tread 20 will be described.

### (2.1) Block 100 and block 150

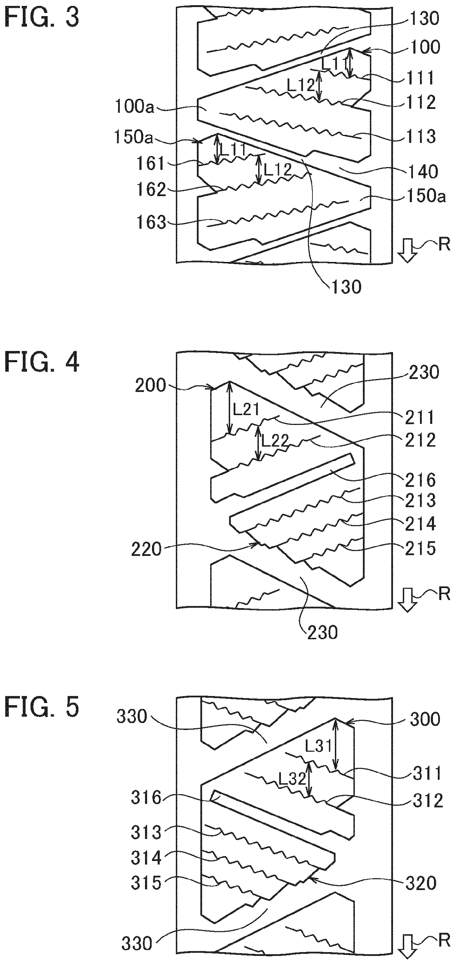

FIG. 3 is a partial plan view of the tread 20 including the block 100 and the block 150. As shown in FIG. 3, the block 100 and the block 150 are alternately provided in the tire circumferential direction. The block 100 and the block 150 have a shape which is linearly symmetrical when they are arranged side by side. That is, the block 150 has a shape in which the block 100 is inverted horizontally.

In the present embodiment, the block 100 and the block 150 have a triangular shape in which the length of the side along the tire width direction is longer than the length of the side along the tire circumferential direction in the tread surface view. Specifically, the block 100 and the block 150 are generally isosceles triangular.

The vertex portions of the plurality of blocks are alternately positioned on one circumferential direction groove side and the other circumferential direction groove side in the tire circumferential direction. More specifically, the vertex portion 100 a (pair vertex) of the block 100 and the vertex portion 150 a (pair vertex) of the block 150 are alternately positioned on the circumferential direction groove 31 side and the circumferential direction groove 32 side in the tire circumferential direction.

As shown in FIG. 3, all or any of the vertex portions of the block 100 and the block 150 may be formed in a notched shape so as not to be pointed, and notched groove portions may be formed between the blocks.

A width direction sipe 111, a width direction sipe 112 and a width direction sipe 113 are formed in the block 100. The sipe is a narrow groove that closes in the ground plane of the land block, and the opening width of the sipe when not grounded is not particularly limited, but is preferably 0.1 mm to 1.5 mm.

The width direction sipe 111 extends in the tire width direction and is formed at a position closest to the tire circumferential direction end portion of the block 100. In this embodiment, the width direction sipe 111 constitutes a first width direction sipe.

The tire circumferential end portion of the block 100 may be any of the tire circumferential ends of the block 100, but may be an end portion on the kick-out side, that is, on the later contact side in contact with the road surface RD (see FIGs. 6A and 6B) later in relation to the rotation direction R.

The width direction sipe 112 is adjacent to the width direction sipe 111 in the tire circumferential direction and extends in the tire width direction. In this embodiment, the width direction sipe 112 constitutes a second width direction sipe.

The width direction sipe 113 is adjacent to the width direction sipe 112 in the tire circumferential direction and extends in the tire width direction.

In the present embodiment, the width direction sipes 111 ~ 113 are zigzag in the tread surface view, but at least any of the width direction sipes 111 ~ 113 need not be zigzag, and may be wavy or linear, for example. The width direction sipes 111 ~ 113 are inclined with respect to the tire width direction, but at least one of the width direction sipes 111 ~ 113 may be substantially parallel to the tire width direction.

The width direction sipes formed in the block 100 may have one end communicating with the circumferential direction groove 31, as in the width direction sipes 111 and 112, or both ends terminating in the block 100, as in the width direction sipes 113. Further, a notched groove-like widened portion may be formed on the circumferential direction groove 31 side as in the width direction sipe 112.

The distance L 11 along the tire circumferential direction from the tire circumferential direction end portion of the block 100 to the width direction sipe 111 is longer than the distance L 12 along the tire circumferential direction from the width direction sipe 111 to the width direction sipe 112.

More specifically, the interval (formation interval) in the tire circumferential direction of the width direction sipes formed in the block 100 may be wider on the kick out side (later contact side). That is, in the central region in the tire circumferential direction, the forming interval of the width direction sipe may be narrower than that of the kick out side end portion.

As described above, the block 150 has a shape in which the block 100 is inverted. Hereinafter, the same parts as those of the block 100 will be appropriately omitted.

As shown in FIG. 3, a width direction sipe 161, a width direction sipe 162 and a width direction sipe 163 are formed in the block 150.

In this embodiment, the width direction sipe 161 and the width direction sipe 162 constitute a first width direction sipe and a second width direction sipe, respectively.

Also in the block 150, the distance L 11 along the tire circumferential direction from the tire circumferential direction end portion of the block 150 to the width direction sipe 161 is longer than the distance L 12 along the tire circumferential direction from the width direction sipe 161 to the width direction sipe 162.

An inter-block narrow groove 130 extending in the tire width direction is formed between adjacent blocks in the tire circumferential direction. Specifically, the inter-block narrow groove 130 is formed between the block 100 and the block 150 adjacent each other in the tire circumferential direction.

The groove width of the inter-block narrow groove 130 may be wider than the groove width of the width direction sipe, but it is preferable that the groove width is such that the block 100 and the block 150 come into contact with each other when the block 100 and the block 150 adjacent each other are grounded. Since the inter-block narrow groove 130 also extends in the tire width direction, it may be interpreted as a width direction groove.

The inter-block narrow groove 130 is inclined in the tire width direction. In the present embodiment, the inclination angles of the plurality of inter-block narrow grooves 130 with respect to the tire width direction are generally the same, but the inclination angles may be slightly different in the tire circumferential direction.

A notch groove 140 wider than the groove width of the inter-block narrow groove 130 communicates with one end of the inter-block narrow groove 130.

The notch groove 140 may be wider than the groove width of the inter-block narrow groove 130, but preferably narrower than the groove width of the circumferential direction groove 31. The length of the notch groove 140 along the tire width direction is preferably shorter than that of the inter-block narrow groove 130.

### (2.2) Block 200 and block 300

FIG. 4 is a partial plan view of the tread 20 including the block 200. FIG. 5 is a partial plan view of the tread 20 including the block 300. As described above, the block 200 and the block 300 have linearly symmetric shapes.

As shown in FIG. 4, an inclined width direction groove 230 is formed between adjacent blocks 200 in the tire circumferential direction. The inclined width direction groove 230 extends inclinedly with respect to the tire width direction. The inclined width direction groove 230 may simply be referred to as a width direction groove.

A width direction sipe 211 and a width direction sipe 212 are formed in the block 200. In this embodiment, the width direction sipe 211 and the width direction sipe 212 constitute a first width direction sipe and a second width direction sipe, respectively.

Also in the block 200, the distance L 21 along the tire circumferential direction from the tire circumferential direction end portion of the block 200 to the width direction sipe 211 is longer than the distance L 22 along the tire circumferential direction from the width direction sipe 211 to the width direction sipe 212.

The block 200 is further formed with a width direction sipes 213 ~ 215 and a width direction narrow groove 216. The width direction narrow groove 216 may be formed on the center side in the tire circumferential direction more than the width direction sipe 212.

The width direction narrow groove 216 extends in the tire width direction. Here, the term "extending in the tire width direction" means that the angle formed with the tire width direction may be approximately 45 degrees or less.

The groove width of the width direction narrow groove 216 is wider than the groove width of the width direction sipe 211 and the width direction sipe 212 and narrower than the groove width of the inclined width direction groove 230. One end of the width direction narrow groove 216 terminates in the block 200.

One of a wall surface section 220 of the block 200 in the tire circumferential direction has unevenness in the tire circumferential direction on a tread surface view. That is, the wall surface section 220 has a stepped shape while extending in the tire width direction.

As shown in FIG. 5, an inclined width direction groove 330 is formed between the adjacent blocks 300 in the tire circumferential direction. Hereinafter, the same parts as those of the block 200 will be appropriately omitted.

A width direction sipe 311 and a width direction sipe 312 are formed in the block 300. In this embodiment, the width direction sipe 311 and the width direction sipe 312 constitute a first width direction sipe and a second width direction sipe, respectively.

Also in the block 300, the distance L 31 along the tire circumferential direction from the tire circumferential direction end portion of the block 300 to the width direction sipe 311 is longer than the distance L 32 along the tire circumferential direction from the width direction sipe 311 to the width direction sipe 312.

The block 300 is further formed with a width direction sipes 313 ~ 315 and a width direction narrow groove 316. The width direction narrow groove 316 may be formed on the center side in the tire circumferential direction more than the width direction sipe 312.

One of a wall surface section 320 of the block 300 in the tire circumferential direction has unevenness in the tire circumferential direction on a tread surface view.

### (3)Function and effects

According to the embodiment described above, the following effects are obtained. FIGS. 6A and 6B are explanatory views of the operation and effect of the block 100 according to the present embodiment. Specifically, FIG. 6A is a diagram schematically showing the shape of the conventional block 100 P at the time of on-ice braking. FIG. 6B is a diagram schematically showing a shape of the block 100 at the time of on-ice braking.

As described above, the distance L 11 along the tire circumferential direction from the tire circumferential direction end portion of the block 100 to the width direction sipe 111 is longer than the distance L 12 along the tire circumferential direction from the width direction sipe 111 to the width direction sipe 112.

Therefore, even when a strong deceleration (G) is generated during braking on ice, since the block rigidity of the tire circumferential end portion of the block 100 is high, deformation such that the tread surface of the block 100 raises from the road surface RD is hardly caused.

On the other hand, in the case of the block 100 P, since the block rigidity of the tire circumferential end portion inevitably becomes low, the tread surface of the block 100 P is easily raised from the road surface RD, and the grounding property of the tire circumferential end portion of the block 100 P is lowered. Therefore, it is difficult to exhibit sufficient scratching effect (edge effect) and water removing performance by the tire peripheral direction end part. Without the anti-lock braking system (ABS), the deceleration G is momentarily high immediately after the start of braking, but then remains low until the tire is locked and the speed just before stopping is reached.

On the other hand, when ABS is provided, a high deceleration G occurs from immediately after the start of braking until the stop. Therefore, a large force is intermittently applied to the block of the tire.

In the case of the block 100, even when the ABS is operated as described above, the deformation of the block 100, especially the deformation at the tire peripheral direction end portion, is suppressed, so that a sufficient ground contact area with the road surface RD can be secured and the grounding property is not impaired. Thereby, sufficient edge effect and water removing performance can be exhibited.

That is, according to the pneumatic tire 10, the on-snow performance, especially the braking performance in consideration of the affinity with ABS, can be further enhanced by the shape of the block itself.

In this embodiment, the ratio TW/SW of the ground contact width TW of the pneumatic tire 10 and the maximum width SW of the pneumatic tire 10 is 0.75 to 0.95. Since the TW/SW is 0.75 or more, a sufficient ground contact area of the tread 20 can be secured, thereby contributing to the improvement of on-snow performance.

Since the TW/SW is 0.95 or less, heat generation of the tread 20 and the tire side portion 30 can be suppressed, and durability is not affected. Further, since a bottom-up portion for connecting the blocks is not provided, an increase in rolling resistance due to an increase in rubber volume can be avoided.

In the present embodiment, the block 100 and the block 150 have a triangular shape in which the length of the side along the tire width direction is longer than the length of the side along the tire circumferential direction in the tread surface view. The vertex portion 100 a and the vertex portion 150 a of the block 100 and the block 150 are alternately positioned in the circumferential direction groove 31 side and in the circumferential direction groove 32 side in the tire circumferential direction. Therefore, the block 100 and the block 150 can effectively enhance the rigidity of the block row repeated in the tire circumferential direction. Thus, the on-snow performance can be further improved.

In the present embodiment, the inter-block narrow groove 130 may be formed between adjacent block 100 and the block 150 in the tire circumferential direction. When the adjacent block 100 and the block 150 are grounded, the adjacent block 100 and the block 150 can contact and support each other, and the block rigidity of the adjacent block 100 and the block 150 can be further enhanced. Thus, the on-snow performance can be further improved.

Further, the notch groove 140 wider than the groove width of the inter-block narrow groove 130 communicates with one end of the inter-block narrow groove 130. Therefore, the edge effect by the notch groove 140 and the snow pillar sharing force can be enhanced. Thus, the on-snow performance, especially the performance on the snow road surface can be improved.

In the present embodiment, a width direction narrow groove 216 which extends in the tire width direction and is wider than the groove width of the width direction sipe 211 and the width direction sipe 212 and narrower than the groove width of the inclined width direction groove 230 may be formed in the block 200. The width direction narrow groove 216 is formed on the center side in the tire circumferential direction more than the width direction sipe 212, and one end of the width direction narrow groove 216 terminates in the block 200. The width direction narrow groove 316 having the same shape may also be formed in the block 300.

Therefore, the edge effect and the snow pillar sharing force due to the width direction narrow groove 216 and the width direction narrow groove 316 can be enhanced. Thus, the on-snow performance, especially the performance on the snow road surface can be improved.

In the present embodiment, the wall surface section 220 (wall surface section 320) of the block 200 (block 300) has unevenness in the tire circumferential direction on the tread surface view. Therefore, the edge effect by the wall surface section 220 can be enhanced. Thus, the on-snow performance, especially the performance on the snow road surface can be improved.

### (4) Other Embodiments

Although the contents of the present invention have been described in accordance with the embodiments described above, it is obvious to those skilled in the art that the present invention is not limited to these descriptions and that various modifications and improvements are possible within the scope of the appended claims.

For example, in the above-described embodiment, in all the blocks, the distance along the tire circumferential direction from the tire circumferential direction end portion to the first widthwise direction sipe is longer than the distance along the tire circumferential direction from the first widthwise direction sipe to the second widthwise direction sipe, but not all the blocks necessarily have such a shape. For example, only the block 100 and the block 150, which particularly affect on-ice braking performance, may have such a shape.

Further, in the above-described embodiment, the rotation direction R of the pneumatic tire 10 is designated, but as described above, the rotation direction R may not necessarily be designated. When the rotation direction R is not specified, it is preferable that the tire circumferential direction end portion on the opposite side also has the positional relationship of the width direction sipe as described above.

Although the invention has been described in detail above, it will be apparent to those skilled in the art that the invention is not limited to the embodiments described herein. This invention may be implemented as a modification and modification without departing from the scope of the invention as defined by the statement of the claims.

### [Explanation of Reference Numerals]

10 Pneumatic tire
20 Tread
30 Tire side portion
31, 32, 35, 36 Circumferential direction groove
40 Carcass
50 Belt layer
60 Bead portion
70 Belt reinforcing layer
100, 100 P Block
100 a Vertex portion
111, 112, 113 Width direction sipe
130 Inter-block narrow groove
140 Notch groove
150 Block
150 a Vertex portion
161, 162, 163 Width direction sipe
200 Block
211, 212, 213 Width direction sipe
216 Width direction narrow groove
220 Wall surface section
230 Inclined width direction groove
300 blocks
311, 312, 313 Width Sipe
316 Width direction narrow groove
320 Wall surface section
330 Inclined width direction groove
CL Tire equatorial line
R Rotation direction
RD Road surface

## Claims

1. A tire (10) having a tread (20), and a plurality of blocks (100, 150) partitioned by a circumferential direction groove (31, 32) extending in a tire circumferential direction and a width direction groove (130) extending in a tire width direction, wherein
a ratio TW/SW of a ground contact width TW of the tire (10) and a maximum width SW of the tire (10) is 0.75 or more and 0.95 or less;
an outside end in the tire width direction of a belt layer (50) including a main belt is positioned outside in the tire width direction than the circumferential direction groove (35, 36) extending in the tire circumferential direction and formed most outside in the tire width direction, wherein
the block (100, 150) includes:
a first width direction sipe (111, 161) extending in the tire width direction and closest to a tire circumferential direction end of the block (100, 150); and
a second width direction sipe (112, 162) which is adjacent to the first width direction sipe (111, 161) in the tire circumferential direction and extending in the tire width direction, wherein
a distance (L11) along the tire circumferential direction from a tire circumferential direction end portion to the first width direction sipe (111, 161) is longer than a distance (L12) along the tire circumferential direction from the first width direction sipe (111, 161) to the second width direction sipe (112, 162), wherein
the block (100, 150) has a triangular shape in which a length of a side along the tire width direction is longer than a length of a side along the tire circumferential direction on a tread surface view,
vertex portions (100a, 150a) of the plurality of blocks (100, 150) are positioned on one of the circumferential direction groove sides in the tire circumferential direction and another one of the circumferential direction groove sides alternately,
the ground contact width (TW) is the width of the ground contact portion of the tread (20) when the pneumatic tire (10) is set to normal internal pressure and normal load is applied, and
in Japan, the normal internal pressure is the air pressure corresponding to the maximum load capacity in the JATMA YearBook, and the normal load is the maximum load capacity (maximum load) corresponding to the maximum load capacity in the JATMA YearBook, and ETRTO in Europe, TRA in the United States, and other tire standards in other countries correspond to that of Japan.

2. The tire (10) according to claim 1, wherein an inter-block narrow groove (130) extending in the tire width direction is formed between blocks (100, 150) adjacent each other in the tire circumferential direction.

3. The tire (10) according to claim 2, wherein a notch groove (140) wider than a groove width of the inter-block narrow groove (130) communicates with one end of the inter-block narrow groove (130).

4. The tire (10) according to claim 1, wherein a width direction narrow groove (216, 316) extending in the tire width direction and wider than a groove width of the first width direction sipe (211, 311) and the second width direction sipe (212, 312) and narrower than a groove width of the width direction groove (230, 330) is formed in the block (200, 300),
the width direction narrow groove (216, 316) is formed on a center side in the tire circumferential direction than the second width direction sipe (212, 312), and
one end of the width direction narrow groove (216, 316) terminates in the block (200, 300).

5. The tire (10) according to claim 4, wherein one of a wall surface portion (220, 320) of the block (200, 300) in the tire circumferential direction has unevenness in the tire circumferential direction on a tread surface view.

## Patentansprüche

1. Reifen (10), der eine Lauffläche (20) und eine Vielzahl von Blöcken (100, 150), die durch eine Umfangsrichtungsrille (31, 32), die sich in einer Reifenumfangsrichtung erstreckt, und eine Breitenrichtungsrille (130), die sich in einer Reifenbreitenrichtung erstreckt, unterteilt wird, aufweist, wobei
ein Verhältnis TW/SW einer Bodenberührungsbreite TW des Reifens (10) und einer maximalen Breite SW des Reifens (10) 0,75 oder mehr und 0,95 oder weniger beträgt,
ein Außenseitenende in der Reifenbreitenrichtung einer Gürtellage (50), die einen Hauptgürtel einschließt, in der Reifenbreitenrichtung außen angeordnet ist als die Umfangsrichtungsrille (35, 36), die sich in der Reifenumfangsrichtung erstreckt und in der Reifenbreitenrichtung am weitesten außen geformt ist, wobei
der Block (100, 150) Folgendes einschließt:
eine erste Breitenrichtungslamelle (111, 161), die sich in der Reifenbreitenrichtung und am nächsten zu einem Reifenumfangsrichtungsende des Blocks (100, 150) erstreckt, und
eine zweite Breitenrichtungslamelle (112, 162), die zu der ersten Breitenrichtungslamelle (111, 161) in der Reifenumfangsrichtung benachbart ist und sich in der Reifenbreitenrichtung erstreckt, wobei
eine Entfernung (L11) entlang der Reifenumfangsrichtung von einem Reifenumfangsrichtungsendabschnitt zu der ersten Breitenrichtungslamelle (111, 161) länger ist als eine Entfernung (L12) entlang der Reifenumfangsrichtung von der ersten Breitenrichtungslamelle (111, 161) zu der zweiten Breitenrichtungslamelle (112, 162), wobei
der Block (100, 150) eine dreieckige Form aufweist, in der eine Länge einer Seite entlang der Reifenbreitenrichtung länger ist als eine Länge einer Seite entlang der Reifenumfangsrichtung auf einer Laufflächenansicht,
Scheitelabschnitte (100a, 150a) der Vielzahl von Blöcken (100, 150) abwechselnd auf einer der Umfangsrichtungsrillenseiten in der Reifenumfangsrichtung und einer anderen der Umfangsrichtungsrillenseiten angeordnet sind,
die Bodenberührungsbreite (TW) die Breite des Bodenberührungsabschnitts der Lauffläche (20) ist, wenn der Luftreifen (10) auf einen normalen Innendruck gebracht ist und eine normale Last ausgeübt wird, und
in Japan der normale Innendruck der Luftdruck ist, welcher der maximalen Tragfähigkeit in dem JATMA YearBook entspricht, und die normale Last die maximale Tragfähigkeit (maximale Last) ist, die der maximalen Tragfähigkeit in dem JATMA YearBook entspricht, und ETRTO in Europa, TRA in den Vereinigten Staaten und andere Reifenstandards in anderen Ländern denjenigen von Japan entsprechen.

2. Reifen (10) nach Anspruch 1, wobei eine schmale Zwischenblockrille (130), die sich in der Reifenbreitenrichtung erstreckt, zwischen Blöcken (100, 150) geformt ist, die einander in der Reifenumfangsrichtung benachbart sind.

3. Reifen (10) nach Anspruch 2, wobei eine Kerbrille (140), breiter als eine Rillenbreite der schmalen Zwischenblockrille (130), mit einem Ende der schmalen Zwischenblockrille (130) in Verbindung steht.

4. Reifen (10) nach Anspruch 1, wobei eine schmale Breitenrichtungsrille (216, 316), die sich in der Reifenbreitenrichtung erstreckt und breiter als eine Rillenbreite der ersten Breitenrichtungslamelle (211, 311) und der zweiten Breitenrichtungslamelle (212, 312) und schmaler als eine Rillenreite der Breitenrichtungsrille (230, 330) ist, in dem Block (200, 300) geformt ist,
die schmale Breitenrichtungsrille (216, 316) auf einer mittigeren Seite in der Reifenumfangsrichtung geformt ist als die Breitenrichtungslamelle (212, 312) und
ein Ende der schmalen Breitenrichtungsrille (216, 316) in dem Block (200, 300) endet.

5. Reifen (10) nach Anspruch 4, wobei ein Wandflächenabschnitt (220, 320) des Blocks (200, 300) in der Reifenumfangsrichtung eine Unebenheit in der Reifenumfangsrichtung auf einer Laufflächenansicht aufweist.

## Revendications

1. Bandage pneumatique (10), comportant une bande de roulement (20), et une pluralité de pavés (100, 150) divisés par une rainure dans la direction circonférentielle (31, 32) s'étendant dans une direction circonférentielle du bandage pneumatique, et une rainure dans la direction de la largeur (130) s'étendant dans une direction de la largeur du bandage pneumatique, dans lequel :
un rapport TW/SW entre une largeur de contact au sol TW du bandage pneumatique (10) et une largeur maximale SW du bandage pneumatique (10) vaut 0,75 ou plus et 0,95 ou moins,
une extrémité extérieure, dans la direction de la largeur du bandage pneumatique, d'une couche de ceinture (50) incluant une ceinture principale est positionnée vers l'extérieur, dans la direction de la largeur du bandage pneumatique, que la rainure dans la direction circonférentielle (35, 36), s'étendant dans la direction circonférentielle du bandage pneumatique et formée le plus à l'extérieur dans la direction de la largeur du bandage pneumatique, dans lequel :
le pavé (100, 150) inclut :
une première lamelle dans la direction de la largeur (111, 161) s'étendant dans la direction de la largeur du bandage pneumatique et le plus près possible d'une extrémité, dans une direction circonférentielle du bandage pneumatique, du pavé (100, 150), et
une deuxième lamelle dans la direction de la largeur (112, 162) qui est adjacente à la première lamelle dans la direction de la largeur (111, 161), dans la direction circonférentielle du bandage pneumatique, et s'étendant dans la direction de la largeur du bandage pneumatique, dans lequel :
une distance (L11) le long de la direction circonférentielle du bandage pneumatique, d'une partie d'extrémité, dans la direction circonférentielle du bandage pneumatique, vers la première lamelle dans la direction de la largeur (111, 161) est plus longue qu'une distance (L12) le long de la direction circonférentielle du bandage pneumatique, de la première lamelle dans la direction de la largeur (111, 161) vers la deuxième lamelle dans la direction de la largeur (112, 162), dans lequel :
le pavé (100, 150) a une forme triangulaire, dans laquelle une longueur d'un côté, le long de la direction de la largeur du bandage pneumatique, est plus longue qu'une longueur d'un côté le long de la direction circonférentielle du bandage pneumatique, dans une vue de la surface de bande de roulement,
des parties de sommet (100a, 150a) de la pluralité de pavés (100, 150) sont positionnées par alternance sur l'un des côtés de rainure dans la direction circonférentielle, dans la direction circonférentielle du bandage pneumatique, et un des autres côtés de rainure dans la direction circonférentielle,
la largeur de contact au sol (TW) est la largeur de la partie de contact au sol de la bande de roulement (20) lorsque le bandage pneumatique (10) est ajusté à la pression interne normale et qu'une charge normale est appliquée, et
au Japon, la pression interne normale est la pression d'air correspondant à la capacité de charge maximale dans le JATMA YearBook, et la charge normale est la capacité de charge maximale (charge maximale) correspondant à la capacité de charge maximale dans le JATMA YearBook, et ETRTO en Europe, TRA aux Etats-Unis, et d'autres normes liées aux bandages pneumatiques dans d'autres pays correspondent à celles du Japon.

2. Bandage pneumatique (10) selon la revendication 1, dans lequel une rainure étroite entre pavés (130) s'étendant dans la direction de la largeur du bandage pneumatique est formée entre des pavés (100, 150) adjacents les uns aux autres dans la direction circonférentielle du bandage pneumatique.

3. Bandage pneumatique (10) selon la revendication 2, dans lequel une rainure à encoche (140), plus large qu'une largeur de rainure de la rainure entre pavés (130) communique avec une extrémité de la rainure étroite entre pavés (130).

4. Bandage pneumatique (10) selon la revendication 1, dans lequel une rainure étroite dans la direction de la largeur (216, 316), s'étendant dans une direction de la largeur du bandage pneumatique, et plus large qu'une largeur de rainure de la première lamelle dans la direction de la largeur (211, 311) et de la deuxième lamelle dans la direction de la largeur (212, 312), et plus étroite qu'une largeur de rainure de la rainure dans la direction de la largeur (230, 330), est formée dans le pavé (200, 300),
la rainure étroite dans la direction de la largeur (216, 316) est formée sur un côté central, dans la direction circonférentielle du bandage pneumatique, que la deuxième lamelle dans la direction de la largeur (212, 312), et
une extrémité de la rainure étroite dans la direction de la largeur (216, 316) se termine dans le pavé (200, 300).

5. Bandage pneumatique (10) selon la revendication 4, dans lequel une partie de paroi latérale (220, 320) du pavé (200, 300), dans la direction circonférentielle du bandage pneumatique, présente un caractère inégal dans la direction circonférentielle du bandage pneumatique, dans une vue de la surface de bande de roulement.
